# EUROPÄISCHE PATENTSCHRIFT

(11) **EP 2 118 993 B1**
(45) Veröffentlichungstag und Bekanntmachung des Hinweises auf die Patenterteilung: **01.08.2018**
(21) Anmeldenummer: 07711238.1
(22) Anmeldetag: 13.03.2007
(51) Int. Cl.: H02M 7/12, H02J 3/36

(54) **VERFAHREN ZUR SCHADENBEGRENZUNG EINES LEISTUNGSHALBLEITER AUFWEISENDEN STROMRICHTERS BEI EINEM KURZSCHLUSS IM GLEICHSPANNUNGSZWISCHENKREIS**
METHOD FOR LIMITING DAMAGE TO A CONVERTER HAVING A POWER SEMICONDUCTOR IN THE CASE OF A SHORT CIRCUIT OF AN INTERMEDIATE DIRECT CURRENT CIRCUIT
PROCÉDÉ POUR LIMITER LES DOMMAGES À UN REDRESSEUR PRÉSENTANT UN SEMI-CONDUCTEUR DE PUISSANCE DANS LE CAS D'UN COURT-CIRCUIT DANS UN CIRCUIT INTERMÉDIAIRE À TENSION CONTINUE

(43) Veröffentlichungstag der Anmeldung: 18.11.2009
(73) Patentinhaber: Siemens Aktiengesellschaft, 80333 München (DE)
(72) Erfinder: DOMMASCHK, Mike, 01945 Guteborn (DE); DORN, Jörg, 96155 Buttenheim (DE); EULER, Ingo, 91056 Erlangen (DE); LANG, Jörg, 95346 Stadtsteinach (DE); TU, Quoc-Buu, 90574 Rosstal (DE); WÜRFLINGER, Kraus, 90419 Nürnberg (DE)
(86) Internationale Anmeldenummer: PCT/DE2007/000485
(87) Internationale Veröffentlichungsnummer: WO 2008/110129

(56) Entgegenhaltungen:
- WO-A-2007/023064
- DE-A1- 10 323 220
- DE-A1- 19 736 903

## Beschreibung

Die Erfindung betrifft ein Verfahren zur Schadensbegrenzung eines Leistungshalbleiter aufweisenden Stromrichters, der über einen kurzschlussbehafteten Gleichspannungszwischenkreis mit wenigstens einem weiteren Stromrichter oder wenigstens einer elektrischen Maschine verbunden ist.

Die Vorrichtung zum Umrichten eines elektrischen Stromes ist aus der DE 103 23 220 A1 bereits bekannt. Dort ist ein so genannter Multiterminal-Stromrichter zum Anschluss an ein Energie speisendes dreiphasiges Versorgungsnetz offenbart. Der vorbekannte Stromrichter verfügt über Phasenmodule, deren Anzahl der Anzahl der anzuschließenden Phasen des Versorgungsnetzes entspricht. Jedes Phasenmodul weist einen Wechselspannungsanschluss und zwei Gleichspannungsanschlüsse auf, wobei die Gleichspannungsanschlüsse der Phasenmodule an einen Gleichspannungszwischenkreis angeschlossen sind. Zwischen jedem Wechselspannungsanschluss und jedem Gleichspannungsanschluss erstrecken sich Phasenmodulzweige, wobei jeder Phasenmodulzweig aus einer Reihenschaltung von Submodulen besteht. Jedes Submodul verfügt über einen eigenen Energiespeicher, der parallel zu einer Leistungshalbleiterschaltung geschaltet ist. Die Leistungshalbleiterschaltung verfügt über abschaltbare Leistungshalbleiter, wie IGBTs, GTOs oder dergleichen, denen jeweils eine Freilaufdiode antiparallel geschaltet ist. Liegt im Gleichspannungskreis ein Kurzschluss vor, kommt es zur Entladung der Energiespeicher des jeweiligen Submoduls. Um eine Zerstörung der Leistungshalbleiter der Submodule zu vermeiden, ist jedem durch einen Kurzschluss im Gleichspannungskreis gefährdeten Leistungshalbleiter ein Halbleiterschutzmittel, z.B. ein Thyristor parallel geschaltet, der bei einem Kurzschluss gezündet wird und anschließend einen Großteil des Kurzschlussstromes trägt. Nachteilig bei der vorbekannten Lösung ist, dass die Zündeinheit, die den Thyristor zündet, durch den Energiespeicher der Submodule mit Energie versorgt wird. Dies erübrigt zwar eine separate Energieversorgung der Zündeinheiten. Beim Verbinden des Stromrichters mit dem Drehstromnetz sind die Energiespeicher der Submodule jedoch noch nicht geladen, so dass eine Zündung der Thyristoren unmöglich ist. Beim Zuschalten des Versorgungsnetzes ist somit eine Zerstörung der Leistungshalbleiter des vorbekannten Stromrichters nicht auszuschließen, wenn im Gleichspannungskreis ein Kurzschluss vorliegt.

Aus der WO 2007/023064 A1 ist eine Vorrichtung zum Umrichten eines elektrischen Stromes mit wenigstens einem Phasenmodul, das einen Wechselspannungsanschluss und wenigstens einen mit einem Gleichspannungszwischenkreis verbundenen Gleichspannungsanschluss aufweist, wobei zwischen jedem Gleichspannungsanschluss und jedem Wechselspannungsanschluss ein Phasenmodulzweig ausgebildet ist und wobei jeder Phasenmodulzweig über eine Reihenschaltung aus Submodulen verfügt, die jeweils Leistungshalbleiter und einen Energiespeicher aufweisen, wobei Halbleiterschutzmittel in Parallelschaltung zu einem der Leistungshalbleiter jedes Submoduls angeordnet ist.

In der DE 197 36 903 A1 ist eine Anordnung eines Wechselrichters mit einem in einem Gleichspannungszwischenkreis des Wechselrichters angeordneten elektronischen Gleichspannungsschalter offenbart

Aufgabe der Erfindung ist es daher, ein Verfahren der eingangs genannten Art bekannt zu machen, bei denen ein Schaden aufgrund eines gleichspannungsseitig vorliegenden Kurzschlusses auch beim Zuschalten des Versorgungsnetzes sicher verhindert wird.

Die Erfindung löst diese Aufgabe durch ein Verfahren zur Schadensbegrenzung eines Leistungshalbleiter aufweisenden Stromrichters, der über einen kurzschlussbehafteten Gleichspannungszwischenkreis mit anderen Stromrichtern oder sonstigen elektrischen Maschinen verbunden ist, bei dem eine Ansteuereinheit von einem Energiespeicher des Stromrichters oder des Gleichspannungszwischenkreises mit Energie versorgt wird, die Ansteuereinheit einen Kurzschluss feststellt und anschließend wenigstens ein parallel zu einem Leistungshalbleiter geschaltetes Halbleiterschutzmittel ansteuert, so dass ein Kurzschlussstrom sowohl über das Halbleiterschutzmittel als auch über den dazu parallel geschalteten Leistungshalbleiter fließt, wobei jeder Energiespeicher vor der Verbindung des Stromrichters mit dem Gleichspannungszwischenkreis aufgeladen wird.

Erfindungsgemäß wird jeder Energiespeicher der Vorrichtung vor dem Einschalten oder Zuschalten des Wechselspannungsnetzes zunächst aufgeladen, und erst nach Aufladen der Energiespeicher mit dem Gleichspannungszwischenkreis verbunden.

Zum Verhindern des Stromflusses im Kurzschlussfall verfügt die Vorrichtung zweckmäßigerweise über einen Gleichspannungsschalter, über den wenigstens ein Gleichspannungsanschluss jedes Phasenmoduls mit dem Gleichspannungskreis verbunden ist. Der Gleichspannungsschalter verfügt über eine Trennstellung, in der ein Stromfluss über den Gleichspannungsschalter verhindert ist, und über eine Kontaktstellung, in der ein Stromfluss über den Gleichspannungsschalter ermöglicht ist. Befindet sich der Gleichspannungsschalter in seiner Trennstellung kann somit jeder Energiespeicher des Gleichspannungszwischenkreises oder jeder Energiespeicher jedes Submoduls zunächst aufgeladen werden. Nach dem Aufladen der Energiespeicher wird das Wechselspannungsnetz wieder von dem Stromrichter getrennt. Erst dann kommt es durch Überführen des Gleichspannungsschalters in seine Kontaktstellung zum Anschluss des Gleichspannungszwischenkreises, wobei im Falle eines Kurzschlusses im Gleichspannungszwischenkreis und nach dem wieder Zuschalten des Wechselspannungsnetzes die aufgeladenen Energiespeicher die zum Zünden des oder der Halbleiterschutzmittel notwendige Energie bereitstellen. Der Gleichspannungsschalter ist vorteilhafterweise ein mechanischer Trennschalter.

Vorteilhafterweise ist jeder Wechselspannungsanschluss über einen Wechselspannungsschalter mit einem Versorgungsnetz verbunden. Durch den Wechselspannungsschalter ist ein besonders einfaches Zuschalten des Versorgungsnetzes ermöglicht, wobei Wechselspannungsschalter ebenfalls zwei Schaltstellungen nämlich eine Trennstellung und eine Kontaktstellung aufweist. Durch Überführen des Wechselspannungsschalters von seiner Trennstellung in seine Kontaktstellung ist das Versorgungsnetz mit dem Stromrichter verbunden, so dass bei "geöffnetem" Gleichspannungsschalter der beziehungsweise die Energiespeicher aufgeladen werden. Der Wechselspannungsschalter ist zweckmäßigerweise ein mechanischer Leistungsschalter.

Zweckmäßigerweise umfassen die Halbleiterschutzmittel wenigstens einen Thyristor. Thyristoren sind kostengünstig erhältlieh und weisen eine ausreichend hohe Stoßstromfestigkeit auf, so dass der betroffene Thyristor auch bei schnell ansteigenden und hohen Kurzschlussströmen, welche bei dem Aufschalten des Wechselspannungsnetzes auf einen Kurzschluss im Gleichspannungskreis auftreten, bis zum Wiederöffnen des Wechselspannungsschalters durch den entstandenen Kurzschlussstrom nicht zerstört wird.

Zweckmäßigerweise umfasst jedes Submodul einen abschalteten Leistungshalbleiter mit einer gegensinnig dazu geschalteten Freilaufdiode, wobei jeder Energiespeicher in dem Gleichspannungszwischenkreis angeordnet ist. Stromrichter mit einem solchen zentralen Energiespeicher werden im Bereich der Energieübertragung und -verteilung eingesetzt. Im zentralen Energiespeicher ist jedoch in der Regel eine hohe Energiemenge gespeichert, die im besagten Kurzschlussfall freigesetzt wird. Die Anordnung oder Verschaltung des zentralen Energiespeichers bezüglich des Gleichspannungsschalters ist im Rahmen der Erfindung so vorgesehen, dass eine Ladung beziehungsweise Entladung des Energiespeichers auch bei geöffnetem Gleichspannungsschalter ermöglicht ist. Der Gleichspannungsschalter ist daher von den Gleichspannungsanschlüssen der Phasenmodule aus betrachtet der Anschlussklemme des Energiespeichers somit nachgeschaltet. Mit anderen Worten ist der zentrale Energiespeicher zwischen den Gleichspannungsanschlüssen der Phasenmodule und dem Gleichspannungsschalter parallel zu den Phasenmodulen in den Gleichspannungszwischenkreis geschaltet.

Abweichend davon weist jedes Submodul einen Energiespeicher und eine parallel zum Energiespeicher geschaltete Leistungshalbleiterschaltung auf. Eine solche Vorrichtung wird auch als so genannter Multilevel-Stromrichter bezeichnet, da statt eines zentralen großen Energiespeichers mehrere kleinere in Reihe zueinander geschaltete Energiespeicher vorgesehen sind, die jeweils einer Leistungshalbleiterschaltung parallel geschaltet sind.

Gemäß einer diesbezüglich zweckmäßigen Weiterentwicklung ist die Leistungshalbleiterschaltung eine Vollbrückenschaltung. Mit Hilfe der Vollbrückenschaltung ist es möglich, den beiden Anschlussklemmen der bipolaren Submodule, die in Reihe geschaltet sind, die Kondensatorspannung, eine so genannte Null-Spannung oder die invertierte Kondensatorspannung aufzuprägen.

Abweichend davon umfasst die Leistungshalbleiterschaltung zwei in Reihe zueinander geschaltete abschaltbare Leistungshalbleiter, denen jeweils eine Freilaufdiode gegensinnig parallel geschaltet ist. Eine solche Leistungshalbleiterschaltung wird auch als so genannte Marquardt-Schaltung bezeichnet, die in der DE 101 03 031 A1 offenbart ist und die durch diese Bezugnahme Teil der hier vorliegenden Offenbarung sein soll. Im Gegensatz zur Vollbrückenschaltung verfügt die Leistungshalbleiterschaltung gemäß Marquardt lediglich über zwei in Reihe zueinander geschaltete Leistungshalbleiter, die so mit dem Energiespeicher des jeweiligen Submoduls verschaltet ist, dass entweder die an dem Energiespeicher des jeweiligen Submoduls abfallende Spannung an den beiden Anschlussklemmen des Submoduls abfällt oder eine Null-Spannung. Eine Invertierung der an dem Energiespeicher abfallenden Spannung an den Submodulklemmen ist mit der Marquardt-Schaltung nicht ermöglicht. Die Marquardt-Schaltung ist jedoch kostengünstiger als die Vollbrückenschaltung.

Gemäß einer zweckmäßigen Weiterentwicklung des erfindungsgemäßen Verfahrens wird jeder Leistungshalbleiter mittels eines Gleichspannungsschalters mit dem Gleichspannungszwischenkreis verbunden. Auf diese Art und Weise ist es durch mechanische Leistungsschalter, Trennschalter oder dergleichen, oder aber auch durch elektronische Schalter mit Leistungshalbleitern, wie beispielsweise Thyristoren, IGBTs oder dergleichen, möglich, den Gleichspannungszwischenkreis von dem Stromrichter zu trennen. Wesentlich ist hierbei, dass sämtliche Energiespeicher über den Gleichspannungsschalter mit dem Gleichspannungszwischenkreis verbunden sind.

Vorteilhafterweise sind der Stromrichter, die Energiespeicher und der Gleichspannungsschalter in einem gemeinsamen Gehäuse angeordnet.

Zweckmäßigerweise wird jeder Gleichspannungsschalter vor dem Verbinden des Stromrichters mit einem Versorgungsnetz geöffnet. Bei geöffnetem Gleichspannungsschalter können die Energiespeicher geladen werden, um die zum Zünden der Halbleiterschutzmittel notwendige Energie bereitzustellen.

Vorteilhafterweise wird der Stromrichter mittels eines Wechselspannungsschalters mit einem Versorgungsnetz verbunden. Wie bereits ausgeführt wurde, eröffnet diese Weiterentwicklung der Erfindung die größtmögliche Flexibilität bei dem Aufladen der Energiespeicher, wobei gleichzeitig eine kostengünstige Lösung mit Hilfe eines mechanischen Schalters bereitgestellt ist. Jedoch können auch hier anstelle eines mechanischen Schalters ein elektronischer Schalter mit Leistungshalbleitern vorgesehen sein.

Zweckmäßigerweise werden zum Verbinden des Stromrichters mit dem Gleichspannungszwischenkreis zunächst alle Wechselspannungsschalter und alle Gleichspannungsschalter geöffnet, anschließend wird zum Aufladen der Energiespeicher der Wechselspannungsschalter geschlossen, schließlich wird jeder Wechselspannungsschalter nach dem Aufladen der Energiespeicher geöffnet, wobei der Gleichspannungsschalter zur Verbindung des Stromrichters mit dem Gleichspannungszwischenkreis geschlossen und schließlich jeder Wechselspannungsschalter zum Verbinden des Stromrichters mit dem Wechselspannungsnetz geschlossen wird, sofern zuvor kein DC-Kurzschluss detektiert werden konnte. Auf Grundlage dieser einfachen Schaltfolge ist eine kostengünstige Möglichkeit bereitgestellt, die Energiespeicher der Vorrichtung aufzuladen, bevor ein hoher Kurzschlussstrom in Folge eines Kurzschlusses im Gleichspannungszwischenkreis getrieben durch das Wechselspannungsnetz über die Leistungshalbleiter der Vorrichtung fließt, so dass eine notwendige Energie bereitgestellt ist, um Halbleiterschutzmittel anzusteuern.

Weitere zweckmäßige Ausgestaltungen und Vorteile der Erfindung sind Gegenstand der nachfolgenden Beschreibung von Ausführungsbeispielen der Erfindung unter Bezug auf die beigeschlossenen Figuren der Zeichnung, wobei gleiche Bezugszeichen auf gleich wirkende Bauteile verweisen und wobei
- Figur 1: eine Vorrichtung gemäß dem Stand der Technik,
- Figur 2: eine weitere Vorrichtung gemäß dem Stand der Technik,
- Figur 3: ein Ausführungsbeispiel einer Vorrichtung zum Umrichten eines elektrischen Stromes,
- Figur 4: ein weiteres Ausführungsbeispiel einer Vorrichtung zum Umrichten eines elektrischen Stromes,
- Figur 5: die Vorrichtung gemäß Figur 3 in einer anderen Schaltstellung,
- Figur 6: die Vorrichtung gemäß Figur 4 in einer anderen Schaltstellung,
- Figur 7: die Vorrichtung gemäß Figur 3 und 5 in einer anderen Schaltstellung,
- Figur 8: die Vorrichtung gemäß der Figuren 4 und 6 in einer anderen Schaltstellung,
- Figur 9: eine Vorrichtung gemäß der Figuren 4, 6 und 8 in einer weiteren Schaltstellung zeigen.

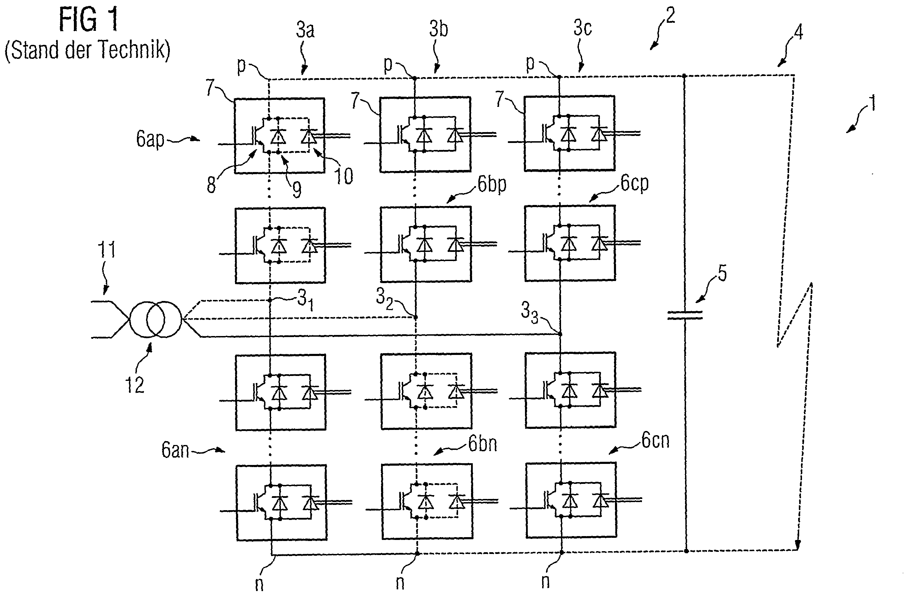

Figur 1 zeigt eine Vorrichtung 1 gemäß dem Stand der Technik. Die vorbekannte Vorrichtung 1 umfasst einen Stromrichter 2, der aus drei Phasenmodulen 3a, 3b und 3c zusammengesetzt ist. Jedes Phasemodul 3a, 3b und 3c verfügt über einen Wechselspannungsanschluss 3₁, 3₂ beziehungsweise 3₃ und zwei Gleichspannungsanschlüsse, die jeweils mit p und n bezeichnet sind. Die Gleichspannungsanschlüsse p beziehungsweise n bilden die Pole eines Gleichspannungszwischenkreises 4, wobei sich ein zentraler Kondensator 5 als Energiespeicher zwischen den beiden Polen p und n in Parallelschaltung erstreckt. Zwischen jedem Wechselspannungsanschluss 3₁, 3₂ und 3₃ und jedem Gleichspannungsanschluss p beziehungsweise n eines Phasenmoduls 3a, 3b beziehungsweise 3c erstrecken sich Phasenmodulzweige 6ap, 6bp, 6cp beziehungsweise 6an, 6bn und 6cn. Jeder dieser Phasenmodulzweige ist aus einer Reihenschaltung von Submodulen 7 zusammengesetzt, die identisch aufgebaut sind. Jedes Submodul 7 verfügt in dem in Figur 1 dargestellten Ausführungsbeispiel über einen abschaltbaren Leistungshalbleiter 8, beispielsweise einen IGBT, einen GTO oder dergleichen, sowie über eine gegensinnig parallel dazu geschaltete Freilaufdiode 9. Ferner ist ein im Falle eines Kurzschlusses ansteuerbarer Thyristor 10 der Freilaufdiode 9 gleichsinnig parallel geschaltet. Liegt ein Kurzschluss im Gleichspannungszwischenkreis 4 vor, kommt es zur Ausbildung des mit gestrichelten Linien angedeuteten Kurzschlussstromes. Es ist erkennbar, dass der Kurzschlussstrom von einem nur schematisch angedeuteten Versorgungsnetz 11 über einen Transformator 12 zur Verbindung der erfindungsgemäßen Vorrichtung 1 mit dem Versorgungsnetz 11 gespeist wird. Dabei fließt in dem gezeigten Ausführungsbeispiel der Kurzschlussstrom über die Freilaufdioden 9, der Submodule sowie über das parallel zur Freilaufdiode 9 geschaltete Halbleiterschutzmittel 10, also dem gezündeten Thyristor. Zum Zünden des Thyristors ist jedoch eine Zündenergie notwendig, die von dem zentralen Kondensator 5 bereitgestellt wird. Der zentrale Kondensator 5 wird vom Versorgungsnetz 11 geladen. Liegt bereits beim erstmaligen Zuschalten des Versorgungsnetzes 11 ein Kurzschluss im Gleichspannungszwischenkreis 4 vor, kann der Thyristor 10 nicht wie in Figur 1 gezeigt in seine Durchlassstellung überführt werden, so dass der sich einstellenden Kurzschlussstrom sowohl auf die Freilaufdiode 9 als auch auf den Thyristor 10 verteilt. Vielmehr trägt dann allein die Freilaufdiode 9 den Kurzschlussstrom, so dass es zur Zerstörung der Submodule 7 und möglicherweise des gesamten Stromrichters 2 kommen kann.

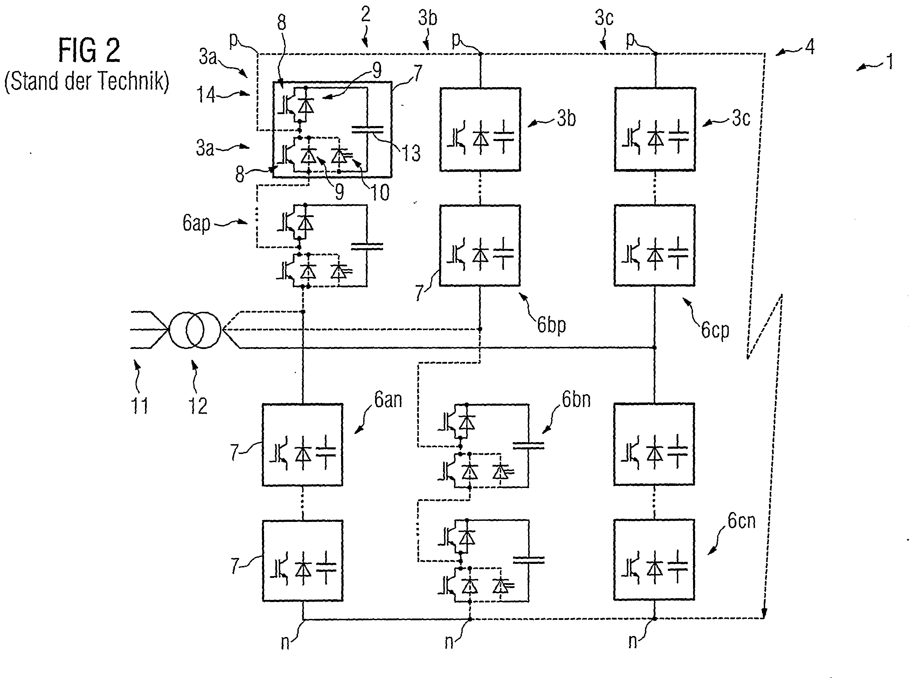

Figur 2 zeigt eine Vorrichtung 1 gemäß dem Stand der Technik, wobei der Stromrichter 2 jedoch als so genannter Multilevel-Stromrichter ausgestaltet ist. Im Gegensatz zur Vorrichtung gemäß Figur 1 verfügt die Vorrichtung gemäß Figur 2 nicht mehr über einen zentralen Energiespeicher im Gleichspannungszwischenkreis 4. Vielmehr umfasst jedes Submodul 7 einen eigenen Energiespeicher 13 in Form eines unipolaren Kondensators. Der Kondensator 13 ist einer Leistungshalbleiterschaltung 14 parallel geschaltet, die in diesem Fall aus zwei in Reihe zueinander geschalteten abschaltbaren Leistungshalbleitern 8, wie beispielsweise IGBTs, GTOs oder dergleichen, besteht. Jedem dieser abschaltbaren Leistungshalbleiter 8 ist eine Freilaufdiode 9 gegensinnig parallel geschaltet. Liegt im Gleichspannungszwischenkreis 4 ein Kurzschluss vor, fließt ein vom Versorgungsnetz 11 gespeister Kurzschlussstrom, dessen Pfad in Figur 2 mit gestrichelten Linien eingezeichnet ist. Es ist erkennbar, dass der Kurzschlussstrom über eine die Freilaufdioden 9 der Leistungshalbleiterschaltung fließt. Nur dieser Freilaufdiode 9 ist ein Halbleiterschutzmittel in Form eines Thyristors 10 parallel geschaltet. Durch Zünden des Thyristors 10 fließt der Kurzschlussstrom sowohl über den Thyristor 10 als auch über die besagte Freilaufdiode 9, wobei der Thyristor 10 und die Freilaufdiode 9 so dimensioniert sind, dass sie eine ausreichend hohe Stromtragfähigkeit bereitgestellt ist, um den entstehenden Kurzschlussströmen Stand zu halten. Nachteilig ist jedoch auch hier, dass die figürlich nicht dargestellte Zündelektronik von dem Kondensator 13 jedes Submoduls 7 mit Energie zum Zünden des Thyristors 10 versorgt wird. Vor dem Anschluss des Versorgungsnetzes 11 ist der Kondensator 13 jedoch nicht geladen, so dass während des Zuschaltens des Versorgungsnetzes 11 der Thyristor 10 nicht gezündet werden kann. Liegt beim Zuschalten des Versorgungsnetzes 11 daher ein Kurzschluss im Gleichspannungszwischenkreis 4 vor, fließt dieser allein über eine der Freilaufdioden 9 der Submodule 7, so dass es zur Zerstörung dieser Freilaufdiode 9 kommen kann. Diese ist jedoch in der Regel mit dem abschaltbaren Leistungshalbleiter 8 zu einem Bauteil zusammengefasst, so dass dies zur Zerstörung der gesamten Leistungshalbleiterschaltung 14 führt.

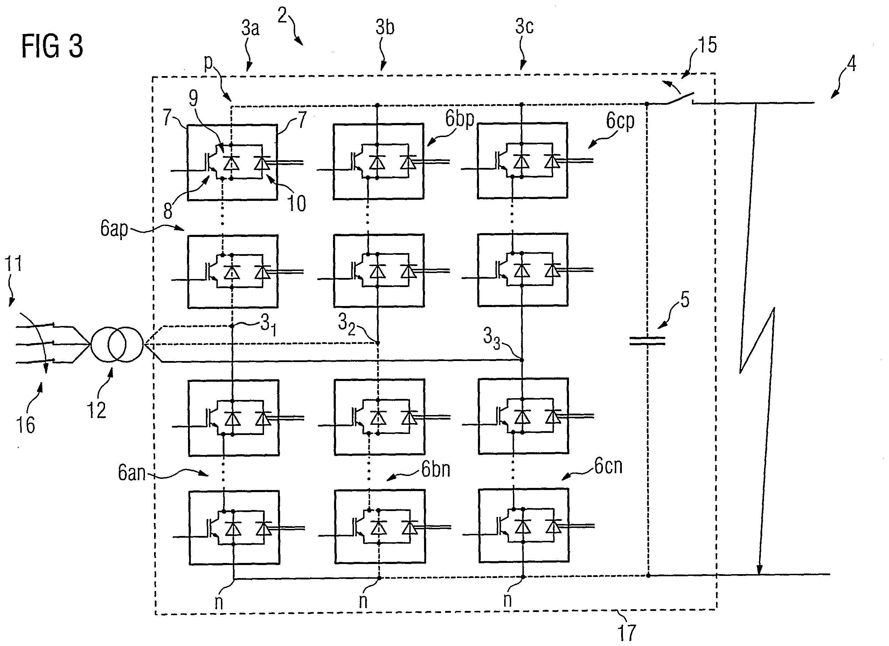

Figur 3 zeigt eine erfindungsgemäße Vorrichtung 14, die Figur 1 entsprechend aufgebaut ist, wobei jedes Submodul 7 aus einem abschaltbaren Leistungshalbleiter 8 sowie einer gegensinnig parallel dazu geschalteten Freilaufdiode 9 besteht. Jeder Freilaufdiode 9 ein Thyristor 10 gleichsinnig parallel geschaltet. Der Gleichspannungszwischenkreis 4 verfügt wieder über einen zentralen Kondensator 5 zwischen dem positiven Pol p und dem negativen Pol n des Gleichspannungszwischenkreises 4. Im Gegensatz zu der vorbekannten Vorrichtung gemäß Figur 1 verfügt das erfindungsgemäße Ausführungsbeispiel gemäß Figur 3 über einen Gleichspannungsschalter sowie über einen Wechselspannungsschalter 16, der zwischen dem Versorgungsnetz 11 und dem Transformator 12 angeordnet ist. Wesentlich ist ferner, dass die mit dem positiven Pol des Gleichspannungszwischenkreises 4 verbundene Anschlussklemme des Kondensators 5 zwischen den Gleichspannungsanschlüssen p der Phasenmodule 3a, 3b und 3c und dem Gleichspannungsschalter 15 angeordnet ist. Der Gleichspannungsschalter 15, der Kondensator 5 und die Phasenmodule 3a, 3b und 3c sind in einer Ventilhalle 17 angeordnet, die bei der Konstruktion einer so genannten Hochspannungsgleichstromübertragungsanlage üblich ist.

In Figur 3 ist der Gleichspannungsschalter 15 in seiner Trennstellung, in der ein Stromfluss über den Gleichspannungsschalter 15 verhindert ist. Der Wechselspannungsschalter 16 ist hingegen in seiner Kontaktstellung, so dass das Versorgungsnetz 11 mit dem in der Ventilhalle 17 angeordneten Stromrichter 2 elektrisch verbunden ist. Durch den geöffneten Gleichspannungsschalter 15 ist jedoch ein Stromfluss über den kurzschlussbehafteten Gleichspannungszwischenkreis 4 verhindert. Der zentrale Kondensator 5 kann bei zugeschaltetem Versorgungsnetz 11 jedoch aufgeladen werden. Der Strompfad zum Aufladen des Kondensators 5 ist in Figur 3 mit gestrichelten Linien dargestellt. Es ist erkennbar, dass der Aufladestrom über die Freilaufdioden 9 der Submodule 7 fließt.

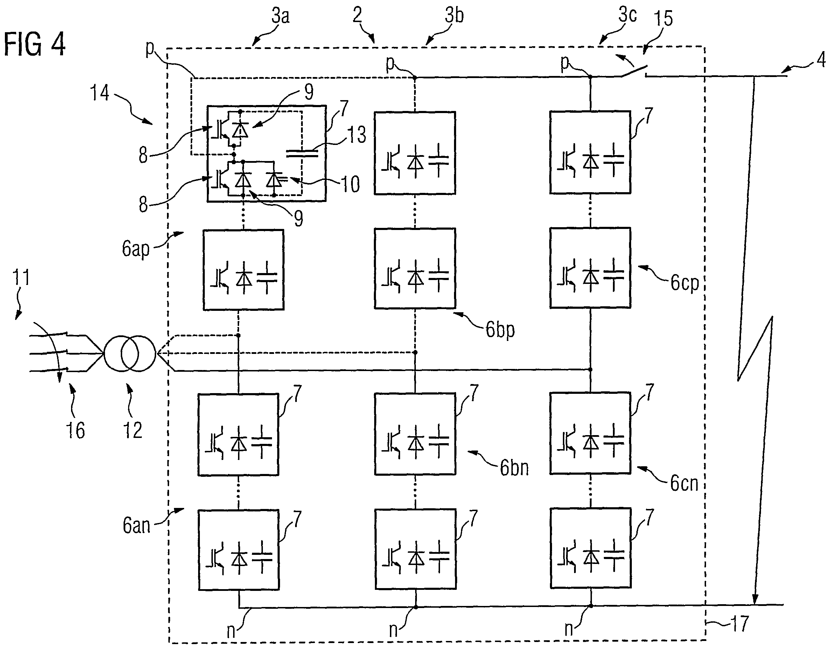

Figur 4 zeigt wieder einen so genannten Multilevel-Stromrichter 14, der in seinem Aufbau dem Stromrichter gemäß Figur 2 entspricht. Das erfindungsgemäße Ausführungsbeispiel umfasst jedoch darüber hinaus wieder einen Gleichspannungsschalter 15, über den die Gleichspannungsanschlüsse p der Phasenmodule 3a, 3b beziehungsweise 3c mit dem Gleichspannungszwischenkreis 4 verbunden sind. Darüber hinaus ist das Versorgungsnetz 11 wieder über einen Wechselspannungsschalter 16 mit dem Transformator und somit mit dem Stromrichter 2 verbunden. Wie in Figur 3 ist der Gleichspannungsschalter 15 in seiner Trennstellung, wobei der Wechselspannungsschalter 16 sich in seiner Kontaktstellung befindet. Wie in Figur 3 kommt es auch bei einem Multilevel-Stromrichter 14 gemäß Figur 4 bei dieser Schalterstellung zum Aufladen der Kondensatoren 13 jedes Submoduls 7, wobei der Aufladestrompfad wieder mit gestrichelten Linien dargestellt ist. Es ist erkennbar, dass der Aufladestrom über diejenige Freilaufdiode 9 fließt, der kein Thyristor 10 parallel geschaltet ist.

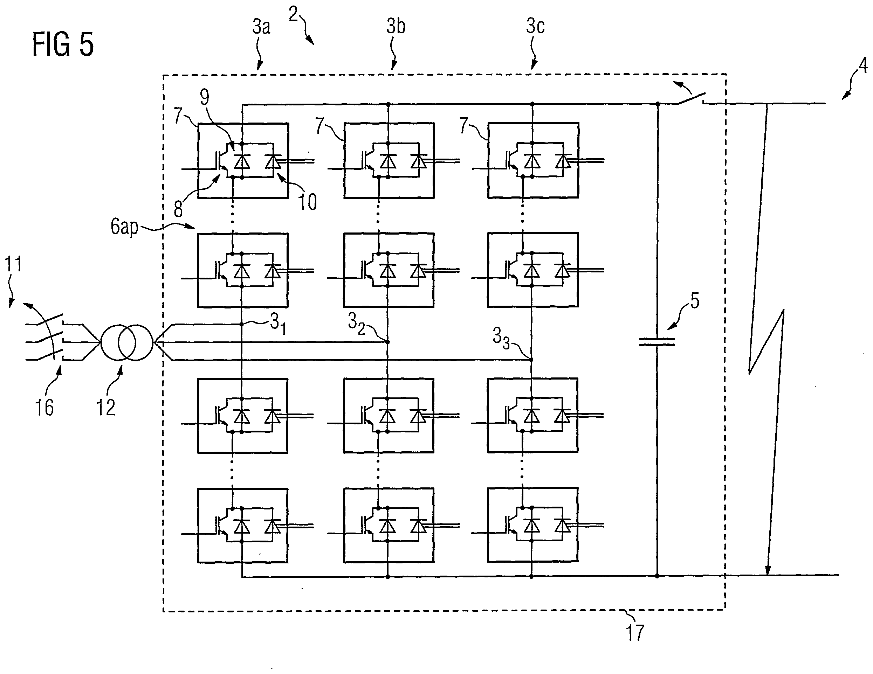

Figur 5 zeigt die Vorrichtung gemäß Figur 3, wobei jedoch der Wechselspannungsschalter 16 in seine Trennstellung überführt ist. Dies erfolgt beispielsweise dann, wenn der Kondensator 5 soweit mit Energie geladen ist, dass eine Zündung des Thyristors 10 im Fehlerfall, also bei einem Kurzschluss im Gleichspannungszwischenkreis 4, ermöglicht ist.

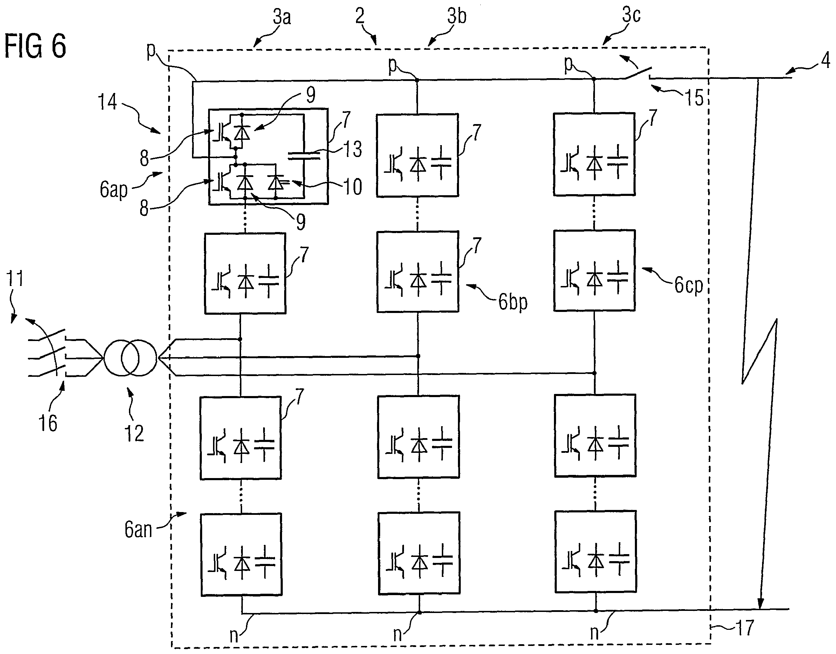

Figur 6 zeigt das Ausführungsbeispiel gemäß Figur 2, wobei ebenfalls der Wechselspannungsschalter 16 in seine Trennstellung überführt ist. Auch hier wird der Wechselspannungsschalter 16 erst dann in seine Trennstellung überführt, wenn die Kondensatoren 13 der Submodule 7 ausreichend geladen sind, um den jeweiligen Thyristor 10 als Halbleiterschutzmittel zünden zu können.

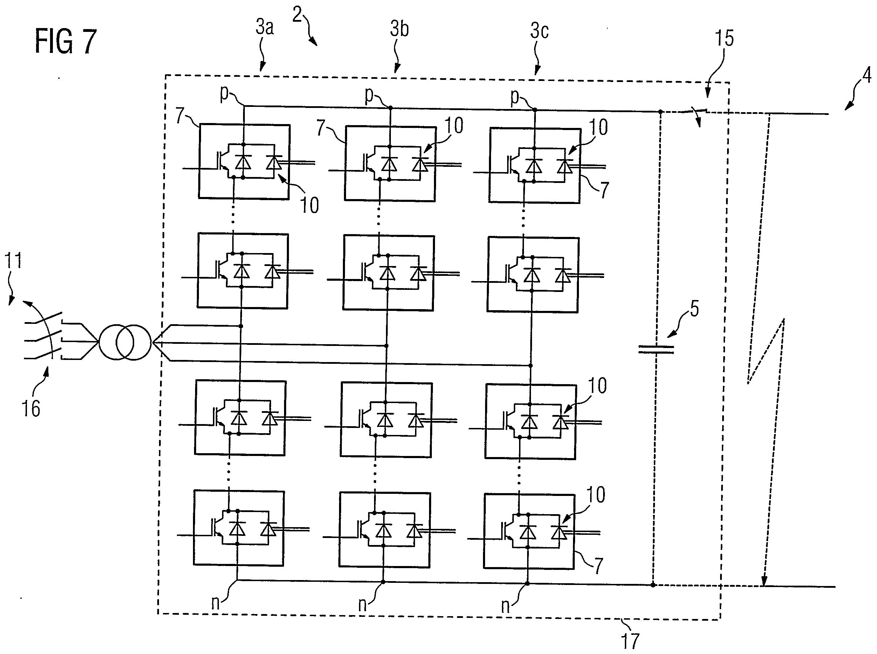

Figur 7 zeigt die Vorrichtung gemäß Figur 5, wobei jedoch der Gleichspannungsschalter 15 in seine Kontaktstellung überführt ist. Aufgrund des Kurzschlusses im Gleichspannungszwischenkreis 4 wird der parallel in den Gleichspannungszwischenkreis 4 geschaltete zentrale Kondensator 5 entladen. Hierbei fließen wieder hohe Kurzschlussströme, die aufgrund geeigneter Strommessung auf einen Kurzschluss im Gleichspannungszwischenkreis 4 schließen lassen. Mit anderen Worten wird der Kurzschluss im Gleichspannungszwischenkreis 4 aufgrund der hohen Entladungsströme des Kondensators 5 erkannt, so dass geeignete Maßnahmen ergriffen werden können.

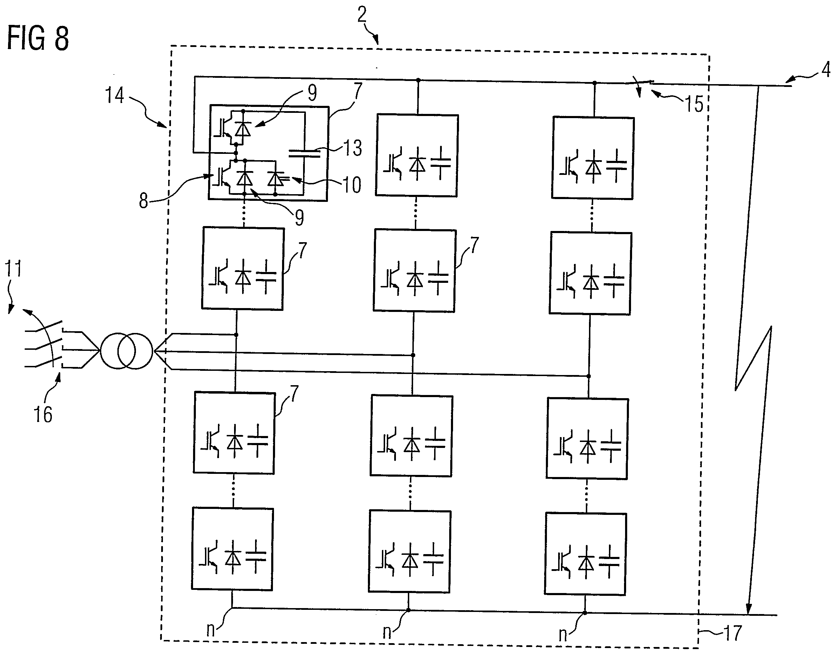

Bei der Multilevel-Topologie gemäß Figur 8 kommt es bei der gleichen Schaltstellung wie in Figur 7, also bei geschlossenem Gleichspannungsschalter 15 und geöffnetem Wechselspannungsschalter 16, nicht zur Entladung der Kondensatoren 13, da die Freilaufdioden 9 der Submodule 7 deren Entladung verhindern.

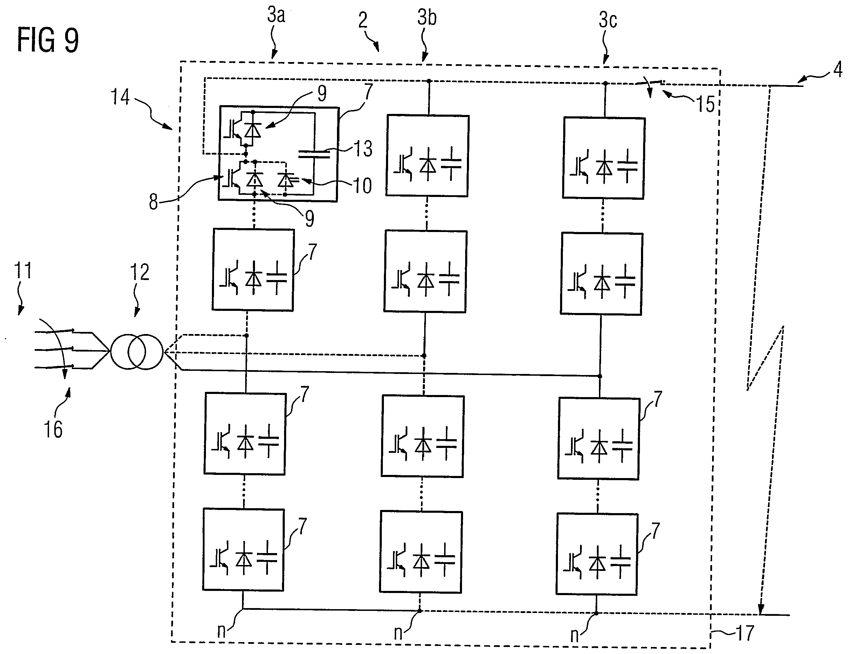

Figur 9 zeigt das Ausführungsbeispiel gemäß Figur 8, wobei jedoch der Wechselspannungsschalter 16 in seine Kontaktstellung überführt ist. Aufgrund des Kurzschlusses im Gleichspannungszwischenkreis 4 fließt ein vom Versorgungsnetz 11 gespeister Kurzschlussstrom, der innerhalb weniger Mikrosekunden von einer geeigneten Nachweiselektronik oder sonstigen Nachweiseinrichtung erkannt wurde, die anschließend den Thyristor 10 zündet. Dabei wird die notwendige Zündungsenergie von den zuvor geladenen Kondensatoren 13 der Submodule 7 bereitgestellt. Der Kurzschlussstrom, der wieder mit gestrichelten Linien in Figur 10 dargestellt ist, führt somit über die Freilaufdiode 9 und gleichzeitig über den parallel geschalteten Thyristor 10. Der Thyristor 10 weist eine ausreichend hohe Stoßstromtragfähigkeit auf, um dem hohen Stromstoß (di/dt) Stand zu halten. Auch ist die Stromtragfähigkeit von Freilaufdiode 9 und parallel geschaltetem Thyristor 10 so hoch, dass die erwarteten Kurzschlussströme nicht zur Zerstörung der Leistungshalbleiter führen.

Nachfolgend wird ein Ausführungsbeispiel des erfindungsgemäßen Verfahrens beschrieben. Zunächst wird die gesamte Vorrichtung 1 vom Versorgungsnetz 11 getrennt. Sowohl der Wechselspannungsschalter 16 als auch der Gleichspannungsschalter 15 sind in ihre Trennstellungen überführt. Bei weiterhin geöffnetem Gleichspannungsschalter 15 wird der Wechselspannungsschalter 16 geschlossen. Ein möglicher Kurzschluss im Gleichspannungszwischenkreis 4 führt aufgrund des geöffneten Gleichspannungsschalters 15 nicht zu einem vom Versorgungsnetz 11 gespeisten Kurzschlussstrom im Stromrichter 2. Aufgrund des geschlossenen Wechselspannungsschalters 16 werden die Energiespeicher im Stromrichter beziehungsweise im Gleichspannungszwischenkreis 4 vom Versorgungsnetz 11 jedoch aufgeladen. Damit ist die Ansteuerung der Halbleiterschutzmittel, also der Thyristoren 10, über eine gewisse Zeitdauer hinweg möglich. Diese Zeitdauer liegt in der Praxis im Minutenbereich, da die Entladung der Kondensatoren mit einer entsprechenden Zeitkonstante behaftet ist. Nach dem Aufladen der Energiespeicher 5,13 durch das Versorgungsnetz 11 wird der Wechselspannungsschalter 16 wieder geöffnet und der Stromrichter somit vom Versorgungsnetz 11 getrennt. Bei aufgeladenen Energiespeichern 5,13 und geöffnetem Wechselspannungsschalter 16 wird der Gleichspannungsschalter 15 geschlossen. Im Falle eines Kurzschlusses wird bei einem zentralen Zwischenkreiskondensator 5 dieser über den Gleichspannungsschalter 15 entladen, wodurch der Fehler erkannt werden kann. Aufgrund der hohen Entladungsströme wird der Gleichspannungsschalter 15, sofern er vorteilhafterweise als Trennschalter ausgeführt ist, geschädigt oder zerstört. Bei einer Multilevel-Stromrichtertopologie mit auf die Submodule 7 verteilten Kapazitäten bleibt bei Zuschaltung des Gleichspannungszwischenkreises 4 die Ladung in den Kondensatoren erhalten, da die Freilaufdioden 9 keine Entladung zulassen. Der Gleichspannungsschalter 15 schaltet somit spannungs- und stromlos, so dass eine Beschädigung des Gleichspannungsschalters 15 vermieden ist. Schließlich wird der Wechselspannungsschalter 16 geschlossen. Bei einem kurzschlussbehafteten Zwischenspannungskreis 4 fließen die vom Versorgungsnetz 11 getriebenen Kurzschlussströme durch die Submodule 7. Diese werden aufgrund einer geeigneten Strommessung schnell, also im Bereich von Mikrosekunden, erkannt, woraufhin ein Zündsignal zum Zünden der Halbleiterschutzmittel, also der Thyristoren 10, abgesetzt wird. Durch die vorgeladenen Energiespeicher 5,13 kann die Ansteuerung eine Zündung der Thyristoren 10 auslösen und damit die parallelen Leistungshalbleiter 8,9 schützen.

Der Gleichspannungsschalter 15 ist zweckmäßigerweise ein einfacher Trennschalter. Beim Wechselspannungsschalter 16 handelt es sich jedoch um einen Leistungsschalter. Leistungsschalter können auch bei von einer Spannung getriebenen Strömen in ihre Trennstellung überführt werden, wobei ein entstehender Lichtbogen gelöscht wird. Mit anderen Worten sind Leistungsschalter in der Lage auch hohe Leistungen wirkungsvoll zu schalten. Trennschalter sind hingegen zum stromlosen Öffnen vorgesehen, wobei die Lichtbogenbildung vermieden ist. Trennschalter sind daher wesentlich kostengünstiger erhältlich.

## Patentansprüche

1. Verfahren zur Schadensbegrenzung eines Leistungshalbleiter (8,9) aufweisenden Stromrichters (2), der über einen kurzschlussbehafteten Gleichspannungszwischenkreis (4) mit wenigstens einem Stromrichter oder wenigstens einer Maschine verbunden ist, bei dem eine Ansteuereinheit von einem Energiespeicher (5,13) des Stromrichters (2) oder des Gleichspannungszwischenkreises (4) mit Energie versorgt wird, die Ansteuereinheit einen Kurzschluss feststellt und anschließend wenigstens ein parallel zu einem Leistungshalbleiter (8,9) geschaltetes Halbleiterschutzmittel (16) ansteuert, so dass ein Kurzschlussstrom sowohl über das Halbleiterschutzmittel (10) als auch über den dazu parallel geschalteten Leistungshalbleiter (8,9) fließt, wobei jeder Energiespeicher (5,13) vor der Verbindung des Stromrichters (2) mit dem Gleichspannungszwischenkreis (4) aufgeladen wird,
**gekennzeichnet dadurch, dass** jeder Leistungshalbleiter (8,9) mittels eines Gleichspannungsschalters (15) mit dem Gleichspannungszwischenkreis (4) verbunden wird,
jeder Gleichspannungsschalter (15) vor dem Verbinden des Stromrichters (2) mit einem Versorgungsnetz (11) geöffnet wird,
der Stromrichter (2) mittels Wechselspannungsschalter (16) mit einem Versorgungsnetz (11) verbunden wird, wobei zum Verbinden des Stromrichters (2) mit dem Gleichspannungszwischenkreis (4) zunächst alle Wechselspannungsschalter (16) und alle Gleichspannungsschalter (15) geöffnet werden, anschließend zum Aufladen des oder der Energiespeicher (5,13) der Wechselspannungsschalter (16) geschlossen wird, jeder Wechselspannungsschalter (16) nach dem Aufladen der Energiespeicher (5,13) geöffnet wird, der Gleichspannungsschalter (15) zur Verbindung des Stromrichters (2) mit dem Gleichspannungszwischenkreis geschlossen wird und schließlich jeder Wechselspannungsschalter zum Verbinden des Stromrichters (2) mit dem Versorgungsnetz (11) geschlossen wird, sofern zuvor kein DC-Kurzschluss detektiert werden konnte.

## Claims

1. Method for limiting damage to a converter (2) having power semiconductors (8, 9), said converter being connected to at least one converter or at least one machine via a DC voltage intermediate circuit (4) affected by a short circuit, wherein a drive unit is supplied with energy by an energy store (5, 13) of the converter (2) or of the DC voltage intermediate circuit (4), the drive unit ascertains a short circuit and subsequently drives at least one semiconductor protective means (16) connected in parallel with a power semiconductor (8, 9), such that a short-circuit current flows both via the semiconductor protective means (10) and via the power semiconductor (8, 9) connected in parallel therewith, wherein each energy store (5, 13) is charged before the converter (2) is connected to the DC voltage intermediate circuit (4),
**characterized in that**
each power semiconductor (8, 9) is connected to the DC voltage intermediate circuit (4) by means of a DC voltage switch (15), each DC voltage switch (15) is opened before the converter (2) is connected to a supply system (11),
the converter (2) is connected to a supply system (11) by means of AC voltage switches (16), wherein
in order to connect the converter (2) to the DC voltage intermediate circuit (4) firstly all the AC voltage switches (16) and all the DC voltage switches (15) are opened, and afterward, in order to charge the energy store or energy stores (5, 13), the AC voltage switch (16) is closed, each AC voltage switch (16) is opened after the charging of the energy stores (5, 13), the DC voltage switch (15) is closed in order to connect the converter (2) to the DC voltage intermediate circuit, and, finally, each AC voltage switch is closed in order to connect the converter (2) to the supply system (11) provided that no DC short circuit was able to be detected beforehand.

## Revendications

1. Procédé pour limiter l'endommagement d'un redresseur (2), qui a un semi-conducteur (8, 9) de puissance et qui est relié à au moins un redresseur ou à au moins une machine par un circuit (4) intermédiaire à tension continue atteint d'un court-circuit, dans lequel on alimente en énergie une unité d'excitation par un accumulateur (5, 13) d'énergie du redresseur (2) ou du circuit (4) intermédiaire à tension continue, l'unité d'excitation constate un court-circuit et, ensuite, excite un moyen (16) de protection de semi-conducteur monté en parallèle à un semi-conducteur (8, 9) de puissance, de manière à ce qu'un courant de court-circuit passe à la fois par le moyen (10) de protection de semi-conducteur et par le semi-conducteur (8, 9) de puissance, qui lui est monté en parallèle, dans lequel on charge chaque accumulateur (5, 13) d'énergie avant la liaison du redresseur (2) au circuit (4) intermédiaire à tension continue,
**caractérisé en ce que**
on relie chaque semi-conducteur (8, 9) de puissance au circuit (4) intermédiaire à tension continue au moyen d'un interrupteur (15) de tension continue,
on ouvre chaque interrupteur (15) à tension continue avant la liaison du redresseur (2) à un réseau (11) d'alimentation,
on relie le redresseur (2) à un réseau (11) d'alimentation au moyen d'un interrupteur (16) de tension alternative, dans lequel
pour relier le redresseur (2) au circuit (4) intermédiaire à tension continue, on ouvre d'abord tous les interrupteurs (16 à tension alternative et tous les interrupteurs (15) à tension continue, on ferme ensuite l'interrupteur (16) à tension alternative pour charger le ou les accumulateurs (5, 13) d'énergie, on ouvre chaque interrupteur (16) à tension alternative après la charge des accumulateurs (5, 13) d'énergie, on ferme l'interrupteur (15) à tension continue pour relier le redresseur (2) au circuit intermédiaire à tension continue et, enfin, on ferme chaque interrupteur à tension alternative pour relier le redresseur (2) au réseau (11) d'alimentation, dans la mesure où on n'a pas pu détecter auparavant de court-circuit de courant continu.
